# EUROPEAN PATENT APPLICATION

(11) **EP 3 492 363 A1**
(43) Date of publication of application: **05.06.2019**
(21) Application number: 17382809.6
(22) Date of filing: 30.11.2017
(51) Int. Cl.: B62M 6/45, B60L 11/00, B60L 11/18, B62J 99/00

(54) **ELECTRIC BICYCLE WITH AUTOMATIC POWER ADJUSTMENT**

(71) Applicant: Valls Guilera, Jorge, 08035 Barcelona (ES); Gorbea Cantalapiedra, Estebe, 48640 Berango (ES)
(72) Inventor: VALLS GUILERA, Jorge, 08035 BARCELONA (ES)
(74) Representative: Juncosa Miró, Jaime

(57) **Abstract**

A pedal assisted electric bicycle (1), which comprises at least one rechargeable battery (2), an electric motor (3), an on-board computing device (4) and electric wiring connecting said elements. The on-board computing device (4) contains a control program (40) which delivers a plurality of power outputs automatically, wherein a specific power output is associated to a specific speed range, included in a broader general speed range. The maximum speed and power output are limited according to the current legislation of the territory where the electric bicycle (1) is located. The user may view specific aspects of the electric bicycle (1) with a remote-control device (10), such as a smartphone, through an electronic application (100) installed in said smartphone and connected to the on-board computing device (4).

## Description

### Technical field

The present invention relates to the field of electrically propelled vehicles by use of an electric motor incorporated in said vehicles as a source of energy, and more specifically the present invention relates to an electric bicycle with a control program which automatically adjusts the power transmitted.

### State of the Art

There is a broad range and variety of electrically propelled vehicles such as electric bicycles in the current market which are known in the current state of the art. The vast majority of these electric bicycles comprise several basic components enabling them to be propelled electrically, as well as manually, according to the user's necessities and power transmission control means or systems integrated in the electric bicycle.

Patent nº US 7,706,935 B2, describes an energy management system for motor-assisted user propelled vehicles comprising a motor and a rechargeable power supply wherein a user inputs at least one control parameter related to said user and a sensor monitors said parameter. A motor controller and command generator which modify the motor performance output, according to the signal emitted by a value comparator of the parameter

Patent nº US 2009/0181826 A1, describes a control system for an electric bicycle wherein said control system controls the power output according to parameters set by the user in relation to a set value for heart rate or other parameters to be set by the user. The control system comprises an information processing unit connected to the bicycle in order to exchange information about operation and control data for the vehicle, and exercise programs, a display to view said information and other characteristics of the electric bicycle such as power, battery state, RPM or speed. The information processing unit is a PDA connected wirelessly with the electric bicycle or by means of a wired connection using a USB port cable to connect said PDA to it.

Patent nº US 8,738,212 B1, describes an electronically-configurable bicycle comprising a computing unit connected to the electric motor which controls performance of said motor based on a user selected mode from a mobile computing device placed on a cradle coupled to the electric bicycle, in view of the user, connected to the computing unit which can access a regulations database to determine maximum power output and speed according to legislation in force of a current location of said electric bicycle through GPS.

However, these electric bicycles use extensive electric wiring, placed throughout a frame or chassis of the electric bicycle, to connect the different components integrated in said frame or chassis. The electric wiring connecting these elements enables the control and transmission of power in order to propel the electric bicycle.

Furthermore, these electric bicycles use an exterior frame or shell in order to cover and protect the extensive wiring and the elements it connects, resulting in a heavier and bulkier electric bicycle.

Finally, certain control systems or means thereof require the use of remote-control devices, placed on the handle or frame of the electric bicycle, such as a smartphone, tablet or PDA in order for the user to be able to manually control the power transmitted or said power transmission being controlled in relation to data from sensors that detect the body condition of the user.

The present invention aims to solve the referenced limitations in the current state of the art.

### Brief description of the invention

The present invention provides a power assisted electric bicycle with reduced electric wiring (without an on-board control unit including commands and a display in the handle bar), the wires only connecting the necessary elements for said electric bicycle to function (energy source and electrical motor and transmission means) and wherein the electric bicycle is controlled through an on-board computing device with default settings or by means of a remote-control device and an electronic application connected to the on-board computing device.

Furthermore, the present invention relates to an electric bicycle, which comprises:
- at least one rechargeable battery;
- an electric motor;
- a speed sensor;
- a pedaling mechanism;
- a PAS (pedal assisted system) sensor;
- an on-board computing device comprising a control program; and
- electric wiring connecting the batteries, the electric motor and the on-board computing device;
wherein said electric bicycle is characterized in that the control program of the on-board computing device is adapted to act automatically as a power selector delivering a plurality of given power outputs in response to a specific speed range, included in a general speed range, without additional electric wiring and the control program is operational when the on-board computing device receives a signal from the PAS (pedal assisted system) sensor which sends a signal to the on-board computing device indicating that a user is using the pedaling mechanism.

In some preferred embodiments of the invention, the specific speed range comprises a plurality of smaller speed intervals, which increase progressively according to the associated given power output which comprises a plurality of smaller power outputs.

The electric bicycle further comprises a braking system and at least one brake sensor wherein, when the braking system is operated the brake sensor sends a signal to the on-board computing device which stops the control program and the electric motor stops powering the electric bicycle.

In a preferred embodiment, the speed sensor of the electric bicycle is integrated in the electric motor and if the speed detected by the speed sensor is higher than a maximum speed limit, the electric motor stops powering the electric bicycle and the control program stops controlling the electric bicycle.

The on-board computer device may include a communication network through which it bi-directionally interacts with a remote-control device which includes an installed electronic application. Through the use of the electronic application installed in the remote-control device connected to the on-board computing device, a user can visualize certain relevant aspects of the electric bicycle, such as: battery level, speed or power transmitted, among others.

The communication network used to communicate bi-directionally is a network included in IEEE standard 802, such as WLAN or WPAN networks and wherein the remote-control device is a smart device, used by the user, which is selected from a group comprising: a smartphone, a tablet, a smart-watch or a PDA.

Through the use of the electronic application the user can modify a driving mode of the electric bicycle wherein, the driving mode is selected from a group comprising:
- a first driving mode, wherein the electric bicycle is powered automatically according to the control program, which is the default setting of the bicycle;
- a second driving mode, wherein the electric bicycle is powered by the user with the pedaling mechanism; and
- a third driving mode, wherein the user by means of the electronic application can select and maintain a desired speed range and associated power output.

According to a preferred embodiment of the invention, the general speed range comprises speeds in between 0 and 25 km/h, wherein 25 km/h is the maximum speed limit for power-assisted electric vehicles in Europe according to the current European Union directive, which is 2002/24/EC.

For a preferred embodiment of the invention, said control program automatically delivers the plurality of given power outputs in response to several specific speed ranges comprising:
- a first transmitted intensity of 0 A for a first speed range comprising speeds between 0 and 4 km/h,
- a second transmitted intensity of 5 A for a second speed range comprising speeds between 4 and 10 km/h,
- a third transmitted intensity of 8.5 A for a third speed range comprising speeds between 10 and 15 km/h,
- a fourth transmitted intensity of 12 A for a fourth speed range comprising speeds between 15 and 20 km/h, and
- a fifth transmitted intensity of 15 A for a fifth speed range comprising speeds between 20 and 25 km/h.

Therefore, if the electric bicycle exceeds the speed limit, in this case if the speed detected by the speed sensor is higher than 25 km/h, the electric motor progressively shuts-down and stops powering the electric bicycle.

In another preferred embodiment of the invention, the general speed range comprises speeds in between 0 and 32 km/h, wherein 32 km/h is the maximum speed limit for power-assisted electric vehicles in in United States according to current legislation and directives in force.

Current smart devices incorporate a GPS locator or tracker which enables the electronic application to determine their current position at all times and therefore enabling the electronic application installed in said smart device to access and download the speed limit according to current legislation of the country where the electric bicycle is currently being used in.

Therefore, in certain embodiments of the invention, the general speed range of the electric bicycle may be modified and regulated according to the latest regulations in force of each country, obtained or downloaded by the smart device and processed by the electronic application.

Furthermore, the present invention includes a method for power adjustment of an electrical bicycle, wherein the bicycle comprises:
- at least one rechargeable battery;
- an electric motor;
- a speed sensor;
- a pedaling mechanism;
- a PAS sensor;
- an on-board computing device comprising a control program;
- electric wiring connecting the batteries, the electric motor and the on-board computing device,
wherein the method is characterized in that the method comprises:
- activating the control program when the on-board computing device receives a signal form the PAS sensor indicating that the pedaling mechanism is
- measuring the speed of the bicycle at any moment; and
- automatically delivering a plurality of given power outputs in response to a specific speed range, of a general speed range by means of said control program of the on-board computing device.

The electric bicycle of the method further comprises a braking system and at least one brake sensor, wherein the use of the braking system stops the automatic control program and if the speed sensor detects a speed higher than a maximum speed limit set by current legislation, the electric motor stops powering the electric bicycle progressively and the control program stops controlling the electric bicycle.

It will be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and not limitative, in which:
- FIG. 1 is a block diagram of a preferred embodiment of the elements and components required to automatically control the power delivered to the electric bicycle.
- FIG. 2 is a graph of an example of a control program of a preferred embodiment of the invention according to European regulations.
- FIG. 3 is a graph of another example of a control program of a preferred embodiment of the invention according to United States regulations.

### Detailed description of an embodiment

The foregoing and other advantages and features will be more fully understood from the following detailed description of an embodiment with reference to the accompanying drawings, to be taken in an illustrative and not limitative, in which:

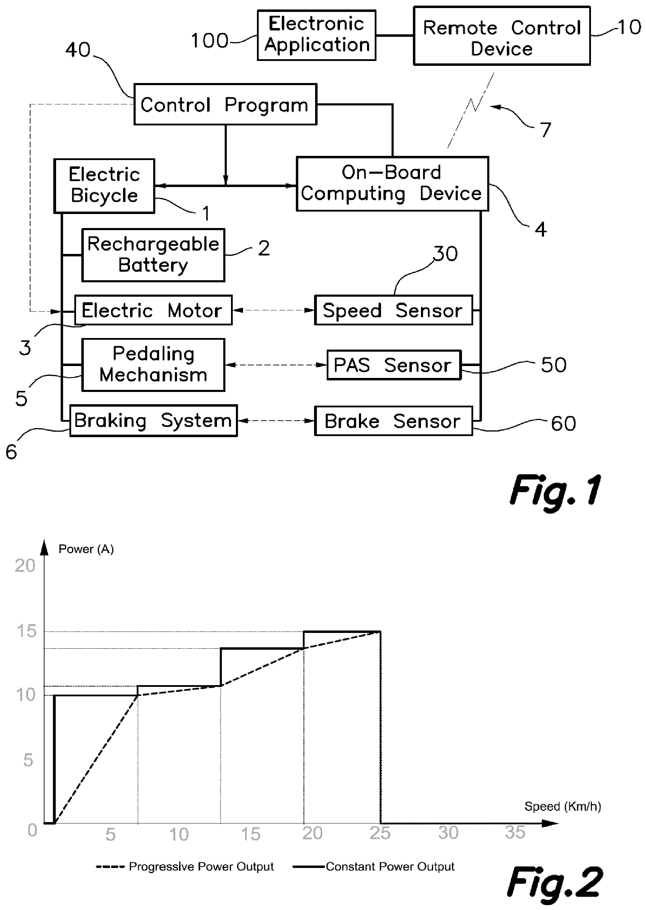

FIG. 1 illustrates a block diagram of a preferred embodiment of an electric bicycle, 1, wherein said electric bicycle 1 comprises: a rechargeable battery 2, an electric motor 3, an on-board computing device 4, a pedaling mechanism 5 and a braking system 6. The only electric wiring used on the electric bicycle, connects: the rechargeable battery 2, the electric motor 3 and the on-board computing device 4.

The on-board computing device includes a control program 40 which is adapted to automatically deliver a plurality of given power outputs in response to specific speed ranges, included in a general speed range, once the on-board computing device 4 receives a signal from a PAS sensor, 50, indicating that a user is using the pedaling mechanism 5.

In the current embodiment a speed sensor 30 is integrated in the electric motor 3 which sends the speed at all times to the on-board computing device 4. When the braking system 6 is used, a brake sensor 60 sends a signal to the on-board computing device 4, which stops the control program 40 resulting in the electric motor 3 not powering the electric bicycle 1 anymore, as the speed reduces progressively.

Furthermore, in another preferred embodiment of the electric bicycle 1, it may include an option wherein the on-board computing device 4 is connected to a remote-control device 10, through a network 7, wherein said remote-control device 10 is a smart device such a as smart-phone or tablet. The remote-control device 10 has an electronic application 100 installed, which allows the user to view certain parameters of the electric bicycle 1 such as: speed, power delivered in Amperes, what power output level is being delivered and battery level, among others. In addition to being able to view said parameters, the user may also select a driving mode configuration.

FIG. 2 shows a graph of an embodiment of the electric bicycle 1 wherein the control program 40 of an on-board computing device 4 is subject to European legislation which means that the maximum speed limit is 25 km/h and the values of the graph are set according to TABLE 1:

**TABLE 1: DATA RELATIVE TO THE GRAPH IN FIG. 2**

| **POWER LEVEL DELIVERED** | **SPEED (Km/h)** | | **POWER DELIVERED (Amp.)** |
|---|---|---|---|
| | **FROM** | **TO** | |
| 0 | 0 | 1 | 0 |
| 1 | 1 | 7 | 10 |
| 2 | 7 | 13 | 11 |
| 3 | 13 | 19 | 13 |
| 4 | 19 | 25 | 15 |
| 5 | 25< | | 0 |

This particular control program 40 includes 5 different power level outputs which are delivered to the electric bicycle 1. Initially, no power is delivered until a minimum speed is achieved, in this particular embodiment the minimum speed is set at 1 km/h. Once said minimum speed is reached the control program 40 automatically determines that a first power level (also known as the first gear) will be delivered to the electric bicycle through an electric motor 3. A speed sensor 30, integrated in the electric motor 3, sends a signal to the on-board computing device 4 which includes the control program 40 if a maximum speed of the first power level is achieved and wherein the control program 40 will automatically begin to deliver a second power level.

In this embodiment, this process is repeated progressively until the speed of the electric bicycle exceeds the speed limit of 25 km/h, set by the European regulations. When the speed limit exceeds said maximum speed limit, the control program 40 is finalized and therefore no more power will be delivered to the electric bicycle 1 progressively stopping the electric motor 3.

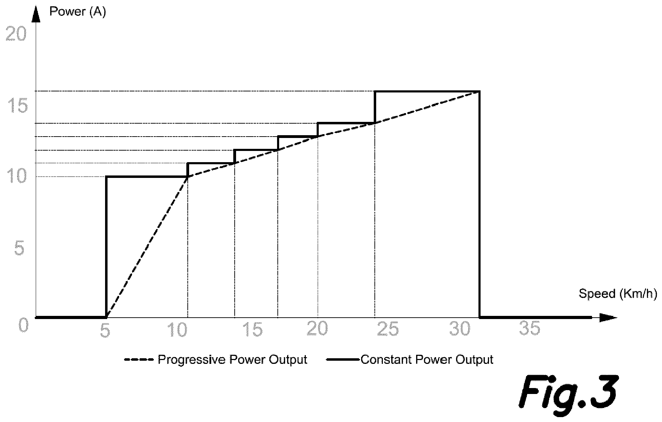

FIG. 3 shows another graph of an alternative embodiment of the electric bicycle 1 wherein the control program 40 of an on-board computing device 4 is subject to American legislation which means that the maximum speed limit is approximately 32 km/h and the values of the graph are set according to TABLE 2:

**TABLE 2: DATA RELATIVE TO THE GRAPH IN FIG. 3**

| **POWER LEVEL DELIVERED** | **SPEED (Km/h)** | | **POWER DELIVERED (Amp.)** |
|---|---|---|---|
| | **FROM** | **TO** | |
| 0 | 0 | 5 | 0 |
| 1 | 5 | 11 | 10 |
| 2 | 11 | 14 | 11 |
| 3 | 14 | 17 | 12 |
| 4 | 17 | 20 | 13 |
| 5 | 20 | 24 | 14 |
| 6 | 24 | 32 | 16 |
| 7 | 32< | | 0 |

The control program 40 includes in this alternative embodiment 7 different power level outputs which are delivered to the electric bicycle 1. Initially, no power is delivered until a minimum speed is achieved, in this particular embodiment the minimum speed is set at 5 km/h. Once said minimum speed is reached the control program 40 automatically determines that a first power level (also known as the first gear) will be delivered to the electric bicycle 1 by means of an electric motor 3. A speed sensor 30, integrated in the electric motor 3, sends a signal to the on-board computing device 4, which includes the control program 40, indicating if a maximum speed for the first power level is achieved and wherein the control program 40 will automatically begin to deliver a second power level. This process of switching power levels is done automatically by the control program 40.

If the electric bicycle 1 exceeds the speed limit of 32 km/h, set by US regulations, the control program 40 is finalized and therefore no more power will be delivered to the electric bicycle 1 progressively stopping the electric motor 3.

The values shown in the tables and associated graphs shown in FIG. 2 and FIG. 3 are just an example of the plurality of power outputs associated with a specific speed range which are included in the control program 40, wherein both the speed range associated with a power output and the number of power outputs can be modified and adapted accordingly.

In some embodiments of the invention, a specific speed range associated with a specific power output may include a plurality of smaller speed intervals associated with smaller power output intervals in order to further increase the battery life by improving and optimizing the power delivered by the electric motor 3 to the electric bicycle 1. If the power output level delivered is constant throughout an associated specific speed range, it is indicated in the graph with a continuous line, whereas if the power output level delivered increases accordingly with speed intervals which are part of the associated speed range, it is shown in the graph with a discontinuous line.

It will be understood that various parts of one embodiment of the invention can be freely combined with parts described in other embodiments, even being said combination not explicitly described, provided there is no harm in such combination.

## Claims

1. A pedal assisted electric bicycle (1), which comprises:
- at least one rechargeable battery (2);
- an electric motor (3);
- a speed sensor (30);
- an on-board computing device (4) comprising a control program (40);
- electric wiring connecting the batteries (2), the electric motor (3) and the on-board computing device (4),
- a pedaling mechanism (5); and
- a PAS sensor (50) which informs the on-board computing device (4) that a user is using the pedaling mechanism (5);
**characterized in that:**
- the control program (40) operates when the on-board computing device (4) receives a signal from the PAS sensor (50), and
- the control program (40) of the on-board computing device (4) is adapted to automatically deliver a plurality of given power outputs in response to specific speed ranges, included in a general speed range.

2. Electric bicycle (1) according to claim 1, wherein within each specific speed range several increasing power outputs are delivered in response to selected increasing speed values included in the range until reaching said specific range's given power output.

3. Electric bicycle (1) according to claim 1 or 2, wherein the electric bicycle (1) further comprises:
- a braking system (6); and
- at least one brake sensor (60);
wherein, when the braking system (6) is operated the brake sensor (60) sends a signal to the on-board computing device (4) which stops the control program (40) and the electric motor (3) stops powering the electric bicycle (1).

4. Electric bicycle (1) according to claim 3, wherein the speed sensor (30) is integrated in the electric motor (3).

5. Electric bicycle (1) according to claim 4, wherein if the speed detected by the speed sensor (30) is higher than a maximum speed limit, the electric motor (3) stops powering the electric bicycle (1).

6. Electric bicycle (1) according to claim 3, wherein the on-board computing device (4) includes a communication network (7) for bi-directionally interacting with a user through an electronic application (100) installed in a remote-control device.

7. Electric bicycle (1) according to claim 6, wherein through the use of the electronic application (100) the user can select a driving mode of the electric bicycle (1) wherein the driving mode is selected from a group comprising:
- a first driving mode, wherein the electric bicycle (1) is powered automatically according to the control program (40), which is the default setting of the electric bicycle (1);
- a second driving mode, wherein the electric bicycle (1) is powered by the user only with the pedaling mechanism (5); and
- a third driving mode, wherein the user by means of the electronic application (100) can select and maintain a desired speed range and associated power output.

8. Electric bicycle (1) according to claim 6 wherein the communication network (7) is a network included in IEEE standard 802.

9. Electric bicycle (1) according to claim 6, wherein the remote-control device is a smart device selected from a group comprising: a smartphone, a tablet, a smart-watch or a PDA.

10. Electric bicycle (1) according to any of the previous claims wherein the bicycle does not include any additional electrical wiring.

11. A method for power adjustment of an electrical bicycle, wherein the bicycle comprises:
- at least one rechargeable battery;
- an electric motor (3);
- a speed sensor (30);
- an on-board computing device (4)comprising a control program (40);
- electric wiring connecting the batteries, the electric motor (3) and the on-board computing device,
- a pedaling mechanism (5); and
- a PAS sensor (50) which informs the on-board computing device (4)that a user is using the pedaling mechanism (5);
**characterized in that** the method comprises:
- activating the control program (40) when the on-board computing device (4)receives a signal form the PAS sensor (50) indicating that the pedaling mechanism (5) is used;
- measuring the speed of the bicycle at any moment; and
- automatically delivering a plurality of given power outputs in response to a specific speed range, of a general speed range by means of said control program (40) of the on-board computing device.

12. A method according to claim 11, wherein within each specific speed range several increasing power outputs are delivered in response to selected increasing speed values included in the range until reaching said range's given power output.

13. A method according to claim 11, wherein the bicycle further comprises:
- a braking system (6); and
- at least one brake sensor (60);
wherein the use of the braking system (6) stops the automatic control program (40).

14. A method according to claim 11, wherein if the speed sensor (30) detects a speed higher than a maximum speed limit, the electric motor (3) stops powering the electric bicycle (1) and the control program (40) stops delivering power to the electric bicycle (1).
